# EUROPEAN PATENT APPLICATION

(11) **EP 4 075 840 A1**
(43) Date of publication of application: **19.10.2022**
(21) Application number: 22167882.4
(22) Date of filing: 12.04.2022
(51) Int. Cl.: H04W 8/18, H04W 48/18, H04W 88/06

(54) **METHOD, APPARATUS AND COMPUTER PROGRAM**

(30) Priority: 13.04.2021 IN 202141017244
(71) Applicant: Nokia Technologies Oy, 02610 Espoo (FI)
(72) Inventor: SABOURI-SICHANI, Faranaz, 9220 Aalborg (DK); SELVAGANAPATHY, Srinivasan, 560017 Bangalore (IN); KANNEATH ABRAHAM, Aby, 686669 Muvattupuzha (IN)
(74) Representative: Nokia EPO representatives

(57) **Abstract**

There is provided an apparatus for a user equipment, the apparatus comprising means for: entering, at the user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determining a first priority for performing one or more operations for the first subscription within at least part of the first time period; determining a second priory for performing said one or more operations for the second subscription; based on the determined priorities, selecting one of the one or more operations for the first subscription and the one or more operations for the second subscription to perform first; and performing the selected one or more operations.

## Description

### FIELD

The present application relates to a method, apparatus, and computer program and in particular but not exclusively to determining whether to perform operations for a first subscription or a second subscription and performing the determined operations.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to an aspect, there is provided an apparatus for a user equipment, the apparatus comprising means for: entering, at the user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determining a first priority for performing one or more operations for the first subscription within at least part of the first time period; determining a second priory for performing said one or more operations for the second subscription; based on the determined priorities, selecting one of the one or more operations for the first subscription and the one or more operations for the second subscription to perform first; and performing the selected one or more operations.

The selecting means may be for: determining that the first priority is higher than the second priority; and completing the one or more operations on the first subscription before the one or more operations for the second subscription.

The means for determining that the first priority is higher than the second priority may comprise means for: determining that a mobility related procedure for the user equipment on the first network is ongoing or predicted to be triggered; and determining that the mobility related procedure is to be completed before the one or more operations for the second subscription is performed.

The mobility related procedure may comprise one of: a handover procedure; a conditional handover procedure; a radio link recovery procedure; and a beam failure recovery procedure.

Determining that a mobility related procedure for the user equipment on the first network is ongoing or predicted to be triggered may comprise at least one of: performing radio resource management measurements, wherein the determining is based on the measurements; performing radio link monitoring measurements; performing beam failure detection measurements; determining that one or more conditions associated with conditional handover are fulfilled or are close to being fulfilled; determining that a timer related to radio link failure has been started; determining that one or more out-of-synchronization indications have been received at the user equipment; and determining that an indicator for beam failure is observed.

The means may be for completing the mobility related procedure before performing the one or more operations for the second subscription.

Completing the mobility related procedure may comprise at least one of: receiving a handover command and completing the handover procedure; determining that a condition associated with conditional handover is fulfilled and completing the conditional handover procedure; determining that radio link failure has occurred and completing radio link recovery; and determining that beam failure is detected and completing beam failure recovery.

The one or more operations on the second network may comprise at least one of: performing radio resource management measurements on the second network; performing mobile originated signalling; transmitting an on-demand system information block request; and receiving one or more system information blocks.

The means may be for: sending, to the first network, a request for a gap in service for the first subscription for a given duration.

The request may be included in a radio resource control reconfiguration complete message or a radio resource control re-establishment complete message.

The user equipment may maintain a radio resource control connection to a first network while performing the one or more activities on the second network.

The means may be for: determining that the second priority is higher than the first priority; and aborting the one or more operations for the first subscription.

The means may be for: determining that a mobility related procedure for the user equipment on the first network is ongoing; and aborting the mobility related procedure responsive to determining that the second priority is higher than the first priority.

The means may be for: sending, to the first network, an indication that the user equipment will be leaving the first network.

Aborting the mobility related procedure may comprise at least one of: aborting an ongoing handover procedure; aborting an ongoing evaluation of one or more conditions associated with conditional handover; aborting an ongoing conditional handover, wherein the user equipment has initiated access to a target cell in the first network; and aborting a dual active protocol stack handover and triggering a fallback procedure.

The means may be for: receiving, from the first or second network, a further condition, wherein the means is for aborting of the mobility related procedure when the further condition is met.

According to an aspect, there is provided an apparatus comprising at least one processor and at least one memory including a computer program code, the at least one memory and computer program code configured to, with the at least one processor, cause the apparatus at least to: enter, at a user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determine a first priority for performing one or more operations for the first subscription within at least part of the first time period; determine a second priory for performing said one or more operations for the second subscription; based on the determined priorities, select one of the one or more operations for the first subscription and the one or more operations for the second subscription to perform first; and perform the selected one or more operations.

The at least one memory and at least one processor may be configured to cause the apparatus to: determine that the first priority is higher than the second priority; and complete the one or more operations on the first subscription before the one or more operations for the second subscription.

The at least one memory and at least one processor may be configured to cause the apparatus to determine that a mobility related procedure for the user equipment on the first network is ongoing or predicted to be triggered; and determine that the mobility related procedure is to be completed before the one or more operations for the second subscription is performed.

The mobility related procedure may comprise one of: a handover procedure; a conditional handover procedure; a radio link recovery procedure; and a beam failure recovery procedure.

The at least one memory and at least one processor may be configured to cause the apparatus to perform at least one of: performing radio resource management measurements, wherein the determining is based on the measurements; performing radio link monitoring measurements; performing beam failure detection measurements; determining that one or more conditions associated with conditional handover are fulfilled or are close to being fulfilled; determining that a timer related to radio link failure has been started; determining that one or more out-of-synchronization indications have been received at the user equipment; and determining that an indicator for beam failure is observed.

The at least one memory and at least one processor may be configured to cause the apparatus to complete the mobility related procedure before performing the one or more operations for the second subscription.

The at least one memory and at least one processor may be configured to cause the apparatus to perform at least one of: receiving a handover command and completing the handover procedure; determining that a condition associated with conditional handover is fulfilled and completing the conditional handover procedure; determining that radio link failure has occurred and completing radio link recovery; and determining that beam failure is detected and completing beam failure recovery.

The one or more operations on the second network may comprise at least one of: performing radio resource management measurements on the second network; performing mobile originated signalling; transmitting an on-demand system information block request; and receiving one or more system information blocks.

The at least one memory and at least one processor may be configured to cause the apparatus to send, to the first network, a request for a gap in service for the first subscription for a given duration.

The request may be included in a radio resource control reconfiguration complete message or a radio resource control re-establishment complete message.

The user equipment may maintain a radio resource control connection to a first network while performing the one or more activities on the second network.

The at least one memory and at least one processor may be configured to cause the apparatus to determine that the second priority is higher than the first priority; and abort the one or more operations for the first subscription.

The at least one memory and at least one processor may be configured to cause the apparatus to determine that a mobility related procedure for the user equipment on the first network is ongoing; and abort the mobility related procedure responsive to determining that the second priority is higher than the first priority.

The at least one memory and at least one processor may be configured to cause the apparatus to send, to the first network, an indication that the user equipment will be leaving the first network.

Aborting the mobility related procedure may comprise at least one of: aborting an ongoing handover procedure; aborting an ongoing evaluation of one or more conditions associated with conditional handover; aborting an ongoing conditional handover, wherein the user equipment has initiated access to a target cell in the first network; and aborting a dual active protocol stack handover and triggering a fallback procedure.

The at least one memory and at least one processor may be configured to cause the apparatus to receive, from the first or second network, a further condition, wherein the at least one memory and at least one processor may be configured to cause the apparatus to abort the mobility related procedure when the further condition is met.

According to an aspect, there is provided a method for a user equipment, the method comprising: entering, at the user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determining a first priority for performing one or more operations for the first subscription within at least part of the first time period; determining a second priory for performing said one or more operations for the second subscription; based on the determined priorities, selecting one of the one or more operations for the first subscription and the one or more operations for the second subscription to perform first; and performing the selected one or more operations.

The selecting may comprise: determining that the first priority is higher than the second priority; and completing the one or more operations on the first subscription before the one or more operations for the second subscription.

The determining that the first priority is higher than the second priority may comprise: determining that a mobility related procedure for the user equipment on the first network is ongoing or predicted to be triggered; and determining that the mobility related procedure is to be completed before the one or more operations for the second subscription is performed.

The mobility related procedure may comprise one of: a handover procedure; a conditional handover procedure; a radio link recovery procedure; and a beam failure recovery procedure.

Determining that a mobility related procedure for the user equipment on the first network is ongoing or predicted to be triggered may comprise at least one of: performing radio resource management measurements, wherein the determining is based on the measurements; performing radio link monitoring measurements; performing beam failure detection measurements; determining that one or more conditions associated with conditional handover are fulfilled or are close to being fulfilled; determining that a timer related to radio link failure has been started; determining that one or more out-of-synchronization indications have been received at the user equipment; and determining that an indicator for beam failure is observed.

The method may comprise completing the mobility related procedure before performing the one or more operations for the second subscription.

Completing the mobility related procedure may comprise at least one of: receiving a handover command and completing the handover procedure; determining that a condition associated with conditional handover is fulfilled and completing the conditional handover procedure; determining that radio link failure has occurred and completing radio link recovery; and determining that beam failure is detected and completing beam failure recovery.

The one or more operations on the second network may comprise at least one of: performing radio resource management measurements on the second network; performing mobile originated signalling; transmitting an on-demand system information block request; and receiving one or more system information blocks.

The method may comprise sending, to the first network, a request for a gap in service for the first subscription for a given duration.

The request may be included in a radio resource control reconfiguration complete message or a radio resource control re-establishment complete message.

The user equipment may maintain a radio resource control connection to a first network while performing the one or more activities on the second network.

The method may comprise determining that the second priority is higher than the first priority; and aborting the one or more operations for the first subscription.

The method may comprise determining that a mobility related procedure for the user equipment on the first network is ongoing; and aborting the mobility related procedure responsive to determining that the second priority is higher than the first priority.

The method may comprise sending, to the first network, an indication that the user equipment will be leaving the first network.

Aborting the mobility related procedure may comprise at least one of: aborting an ongoing handover procedure; aborting an ongoing evaluation of one or more conditions associated with conditional handover; aborting an ongoing conditional handover, wherein the user equipment has initiated access to a target cell in the first network; and aborting a dual active protocol stack handover and triggering a fallback procedure.

The method may comprise receiving, from the first or second network, a further condition, wherein the means is for aborting of the mobility related procedure when the further condition is met.

According to an aspect, there is provided a computer readable medium comprising program instructions for causing an apparatus to perform at least the following: entering, at a user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determining a first priority for performing one or more operations for the first subscription within at least part of the first time period; determining a second priory for performing said one or more operations for the second subscription; based on the determined priorities, selecting one of the one or more operations for the first subscription and the one or more operations for the second subscription to perform first; and performing the selected one or more operations.

The selecting may comprise: determining that the first priority is higher than the second priority; and completing the one or more operations on the first subscription before the one or more operations for the second subscription.

The determining that the first priority is higher than the second priority may comprise: determining that a mobility related procedure for the user equipment on the first network is ongoing or predicted to be triggered; and determining that the mobility related procedure is to be completed before the one or more operations for the second subscription is performed.

The mobility related procedure may comprise one of: a handover procedure; a conditional handover procedure; a radio link recovery procedure; and a beam failure recovery procedure.

Determining that a mobility related procedure for the user equipment on the first network is ongoing or predicted to be triggered may comprise at least one of: performing radio resource management measurements, wherein the determining is based on the measurements; performing radio link monitoring measurements; performing beam failure detection measurements; determining that one or more conditions associated with conditional handover are fulfilled or are close to being fulfilled; determining that a timer related to radio link failure has been started; determining that one or more out-of-synchronization indications have been received at the user equipment; and determining that an indicator for beam failure is observed.

The apparatus may be caused to perform completing the mobility related procedure before performing the one or more operations for the second subscription.

Completing the mobility related procedure may comprise at least one of: receiving a handover command and completing the handover procedure; determining that a condition associated with conditional handover is fulfilled and completing the conditional handover procedure; determining that radio link failure has occurred and completing radio link recovery; and determining that beam failure is detected and completing beam failure recovery.

The one or more operations on the second network may comprise at least one of: performing radio resource management measurements on the second network; performing mobile originated signalling; transmitting an on-demand system information block request; and receiving one or more system information blocks.

The apparatus may be caused to perform sending, to the first network, a request for a gap in service for the first subscription for a given duration.

The request may be included in a radio resource control reconfiguration complete message or a radio resource control re-establishment complete message.

The user equipment may maintain a radio resource control connection to a first network while performing the one or more activities on the second network.

The apparatus may be caused to perform determining that the second priority is higher than the first priority; and aborting the one or more operations for the first subscription.

The apparatus may be caused to perform determining that a mobility related procedure for the user equipment on the first network is ongoing; and aborting the mobility related procedure responsive to determining that the second priority is higher than the first priority.

The apparatus may be caused to perform sending, to the first network, an indication that the user equipment will be leaving the first network.

Aborting the mobility related procedure may comprise at least one of: aborting an ongoing handover procedure; aborting an ongoing evaluation of one or more conditions associated with conditional handover; aborting an ongoing conditional handover, wherein the user equipment has initiated access to a target cell in the first network; and aborting a dual active protocol stack handover and triggering a fallback procedure.

The apparatus may be caused to perform receiving, from the first or second network, a further condition, wherein the means is for aborting of the mobility related procedure when the further condition is met.

According to an aspect, there is provided a non-transitory computer readable medium comprising program instructions for causing an apparatus to perform at least the method according to any of the preceding aspects.

According to an aspect, there is provided circuitry for: entering, at a user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determining a first priority for performing one or more operations for the first subscription within at least part of the first time period; determining a second priory for performing said one or more operations for the second subscription; based on the determined priorities, selecting one of the one or more operations for the first subscription and the one or more operations for the second subscription to perform first; and performing the selected one or more operations.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some examples;
Figure 2 shows a representation of a control apparatus according to some examples;
Figure 3 shows a representation of an apparatus according to some examples;
Figure 4 shows a method according to some examples;
Figure 5 shows a method according to some examples; and
Figure 6 shows a method according to some examples.

### DETAILED DESCRIPTION

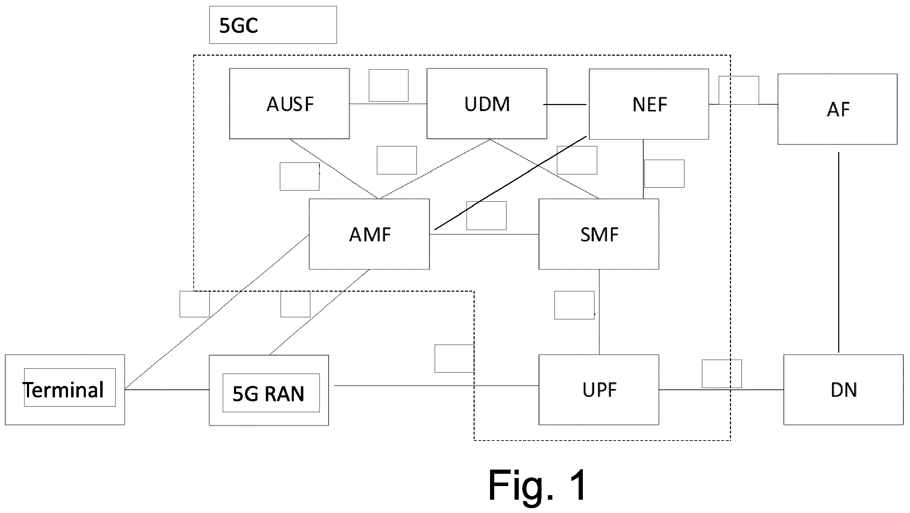

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions. The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF).

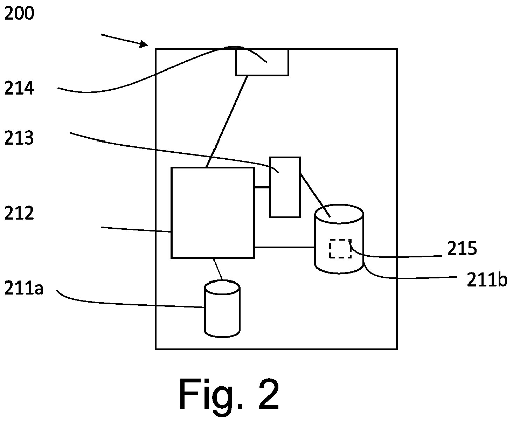

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

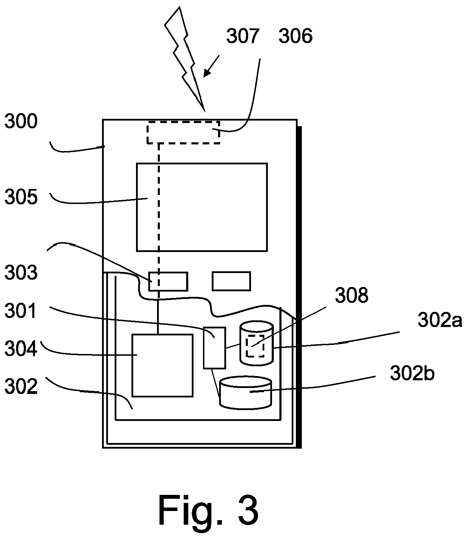

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (loT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 311a and the ROM 311b. The at least one processor 301 may be configured to execute an appropriate software code 308. The software code 308 may for example allow to perform one or more of the present aspects. The software code 308 may be stored in the ROM 311b.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

As briefly described above, the present disclosure relates to an apparatus or device which is arranged to serve multiple identities. For example, the identities may comprise subscriptions and / or subscriber identity modules (SIMs). As an example for SIMs, the apparatus may be arranged to store multiple SIMs or multiple universal or UMTS -SIMs (U-SIMs). Such an apparatus may be known as an MSIM or an MUSIM apparatus. As an example for subscriptions, a subscription may be a subscription to a service offered by a vendor or network operator. For example, a subscription could be to a network provider for voice or data services. In some examples, a subscription could be to a network provider for voice or data services in a Public Land Mobile Network (PLMN), or to a non-public network (NPN).

When MUSIMs are used there is a potential issue that a MUSIM UE may need to perform activities that prevent the UE from having continuous connectivity to the serving cell. For example under the MUSIM framework the activities could be related to one or more activities such as: carrier synchronization; paging monitoring; measurements; data reception or transmission; reading system information from the network. Such activities may also be necessary for radio systems other than 3GPP, and the authentication mechanism for various systems could be different from U-SIM (such as certificates, usernames/passwords, etc). This means the concepts discussed in the present disclosure may be applicable to devices with multiple subscriptions, where not necessarily all subscriptions are related to 3GPP for example.

A multi-USIM UE typically has two (Dual) or more (Multiple) simultaneous network subscriptions, with multiple corresponding identities. Therefore, in this context it may be considered that each identity is associated with at least one subscription. For example, each network subscription may have a corresponding International Mobile Subscriber Identity (IMSI) in case of EPS (evolved packet system) or Subscription Permanent Identifier (SUPI) in case of 5GS. Each subscription may belong to a same or different Mobile Network Operator (MNO) or Mobile Virtual Network Operator (MVNO). Therefore, it will be understood that while some of the examples provided in the present disclosure relate to 3GPP system, one or more of the subscriptions could be related to a non-3GPP system in some examples.

A MUSIM UE may simultaneously have different connectivity states with at least one network for different USIMS. For example, a MUSIM UE may be in an RRC_CONNECTED state with a network corresponding to a first USIM (e.g. network A, also referred to as a first network herein) and in an RRC_IDLE or RRC_INACTIVE with a network corresponding to a second USIM (e.g. network B, also referred to as a second network herein). Network A may be the same network as network B. Network A may be a different network as network B.

There are several mechanisms by which a MUSIM UE may manage to balance activities performed on network A and network B.

For example, the MUSIM UE may be preconfigured with a gap in services on network A during which the UE may receive services or perform activities on network B. If the activity of the MUSIM UE on network B is short enough (i.e. so that the UE can return the network A after completion of the activity on network B), then there may be no need for the MUSIM UE to leave RRC connection in network A while the activity on network B is performed.

In some examples, the MUSIM UE may request a scheduled gap or gaps in service from network A. The need for gap or gaps in RRC connection from network A for activities on network B may be for a fixed time activity, or for a flexible time activity. For example, the MUSIM UE may request a fixed time gap on network A for services on network B, where the time of the gap cannot be changed by the MUSIM UE. For example, the services on network B during a fixed time gap may include monitoring for paging downlink control information (DCI) and receiving paging messages, responding to a paging message, and receiving updated system information blocks (SIBs). In the case of a flexible time activity, the MUSIM UE may be able to postpone planning/requesting the time of the gap in service Examples of services with flexible scheduling time may include performing radio resource management (RRM) measurements for cell reselection, SIB reception, and performing mobile originated (MO) signalling, such as e.g. registration, tracking area updates, and transmitting on-demand SIB request.

The request for a gap in service may help the UE support the USIM in RRC_IDLE or RRC_INACTIVE without leaving RRC_CONNECTED in another USIM with less impact on services.

However, the RRC connection to network A may be dependent on the UE's observed radio condition in the network. For example, the UE may have detected beam failure, the UE may have observed out-of-synch (OoS) messages from higher layers, started Radio Link Failure (RLF) timer T310, or be expecting or have received a handover command or reached a conditional handover criteria. In such cases, a delay in starting the corresponding procedure may result in losing RRC connection with network A.

On the other hand, if the UE needs a gap in services from network A for a longer time, where the network is expected to release the resource or move the UE to RRC_IDLE or RRC_INACTIVE (i.e. the UE is expected to leave RRC_CONNECTED on network A), sending a notification to the network at the correct time may be needed to minimise resource wastage in completing a procedure which would not make sense, as the UE is leaving RRC_CONNECTED state on network A.

To help address at least one of the above mentioned issues, some of the following examples relate to mechanisms to be used in order to minimise negative impact in terms of loss of RRC connection or waste of network resources for MUSIM UE devices.

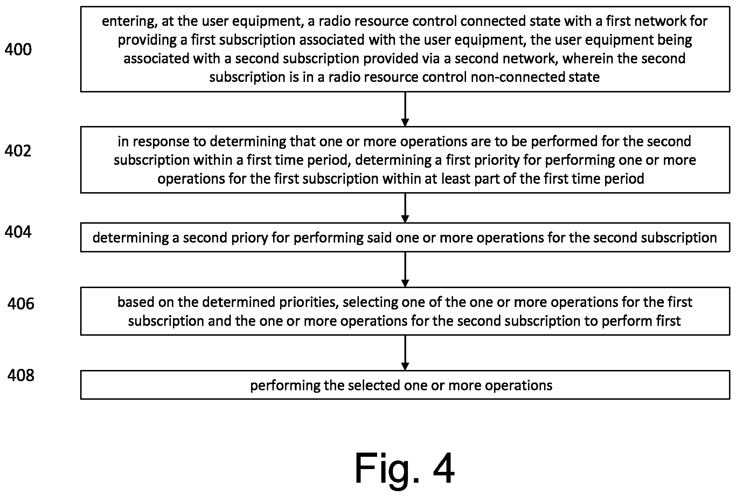

Reference is made to Figure 4, which shows an example method.

At 400, the method comprises entering, at the user equipment, a radio resource control connected state with a first network for providing a first subscription associated with the user equipment, the user equipment being associated with a second subscription provided via a second network, wherein the second subscription is in a radio resource control non-connected state.

At 402, the method comprises, in response to determining that one or more operations are to be performed for the second subscription within a first time period, determining a first priority for performing one or more operations for the first subscription within at least part of the first time period.

At 404, the method comprises determining a second priory for performing said one or more operations for the second subscription.

At 406, the method comprises, based on the determined priorities, selecting one of the one or more operations for the first subscription and the one or more operations for the second subscription to perform first.

At 408, the method comprises performing the selected one or more operations .

In some examples, the MUSIM UE may determine that a first operation on a first network is more important than a second operation on a second network. In this case, the MUSIM UE may complete the first operation before switching to the second network to perform the second operation. In other examples, the MUSIM UE may determine that a first operation on a first network is less important than a second operation on a second network. In this other example, the MUSIM may abort and/or postpone the first operation and switch to the second network to perform the second operation based on the determination.

In some examples, the MUSIM UE may perform certain operations on network B that may be relative short in duration. In other examples, the MUSIM UE may need to perform certain operations on network B that are comparatively long in duration.

In the case of short duration operations, the MUSIM UE may perform these operations while remaining in RRC_CONNECTED mode on network A.

In some examples, the MUSIM UE may determine an importance or criticality of activity occurring in the RRC_CONNECTED state with network A for a first USIM. That is to say, the MUSIM UE may determine a first priority associated with the operations occurring on network A.

When the activity is determined to be important or critical, the MUSIM UE may decide to postpone a flexible time activity corresponding to a second USIM in RRC_IDLE or RRC_INACTIVE state on network B. The MUSIM UE may subsequently determine that the important or critical activity for the first USIM has ended, and then request a temporary gap in service from network A corresponding to the first USIM to initiate the operation in network B.

When the activity is determined to be unimportant or not critical, the MUSIM UE may determine to stop the activity occurring in the RRC_CONNECTED state with network A for the first USIM, and request a temporary gap in service from network A corresponding to the first USIM. The MUSIM UE may also signal information to network A necessary to stop the activity.

For example, the MUSIM UE may intend to send a tracking area update or another short NAS procedure for a second USIM on network B. However, the MUSIM UE may be in the process of performing handover or radio link recovery for a first USIM on network A. In this case, the MUSIM UE may defer triggering setup of RRC connection in network B for the second USIM until successful completion of the RACH procedure for the first USIM on network A. Once the RACH procedure on network A is complete, the MUSIM UE may send an indication to network A that the MUSIM UE needs a temporary gap in service on network A. The indication may be a msg3. The MUSIM UE may then receive a response from network A, for example a msg4, and in response, the MUSIM UE may start to leave network A for the first USIM to connect to network B for the second USIM. In this context, leaving network A means that the UE may not leave RRC_CONNECTED on network A, but instead is unable to send or receive communications with network A during the gap in service.

In the case of longer duration operations, the MUSIM UE may notify network A about the operations, such that the MUSIM UE is placed in an RRC_IDLE or RRC_INACTIVE state on network A while the MUSIM UE performs the operations on network B.

In some examples, the MUSIM UE may need to information network A and leave network A quickly, rather than waiting for ongoing activity to be completed.

The MUSIM UE may determine that the MUSIM UE needs to leave RRC_CONNECTED for a first USIM on network A for data transmission for a second USIM on network B. In some examples, the MUSIM UE may determine the need to leave RRC_CONNECTED on network A based on an importance or criticality of the data transmission on network B. In some examples, the determination may occur while a mobility procedure on network A is ongoing. In such cases, the MUSIM UE may decide to abort the mobility procedure on network A.

For example, the MUSIM UE may receive paging for the second USIM on network B and decide to move the RRC connection for the MUSIM UE from network A to network B. However, the MUSIM UE may be in the middle of a handover or conditional handover process on network A. In such a case, the MUSIM UE may abort the handover process and inform the source cell in network A (and optionally the target cell in network A), allowing the resources allocated for handover to be released.

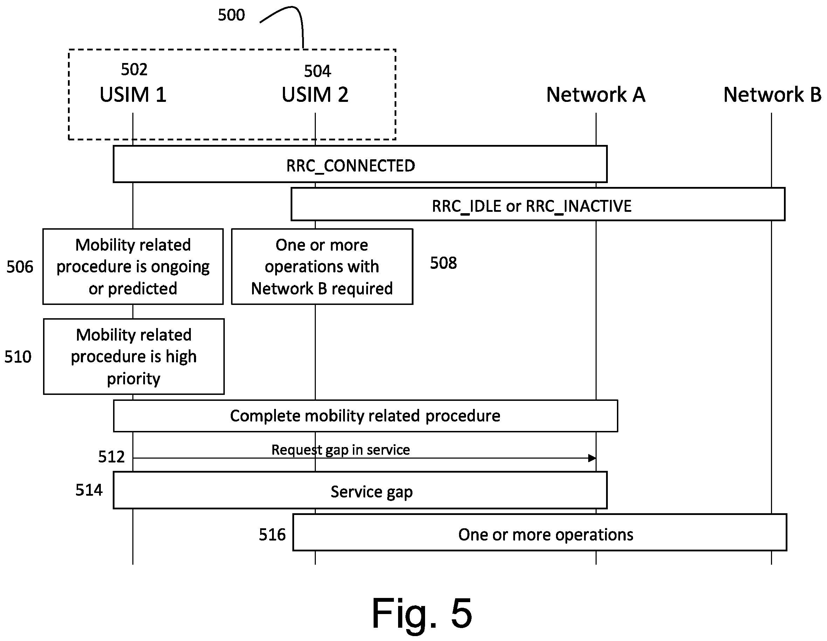

Reference is made to Figure 5, which shows a method according to some examples.

A MUSIM UE 500 has a first USIM 502 and second USIM 504. The first USIM 502 is in RRC_CONNECTED state with Network A, and the second USIM 504 is in RRC_IDLE or RRC_lNACTlVE state with Network B.

At 506, the MUSIM UE 500 determines that a mobility related procedure for the first USIM 502 connection to Network A is ongoing or is predicted to be triggered. The MUSIM UE 500 may observe the radio channel used for the RRC connection of the first USIM 502 to Network A has deteriorated. For example, the MUSIM UE 500 may observe triggers of mobility related procedures. Examples of such triggers include, but are not limited to:
- UE RRM measurements indicate that a measurement reporting event is expected to trigger a handover process - for example, RSRP measurements performed by the UE for the serving cell on Network A indicate that the RSRP for the serving cell is below the RSRP measurements for a neighbouring cell by more than a configured threshold;
- The MUSIM UE is configured for conditional handover, and the condition(s) are fulfilled or close to being fulfilled; or
- The MUSIM UE has started a timer related to radio link failure, such as T310, or received a number of out-of-synchronization indications from higher layers.
- The MUSIM has detected beam failure and is performing beam failure recovery.

At 508, the MUSIM UE 500 determines that it is necessary for one or more operations between the second USIM 504 and Network B. Examples of such operations include, but are not limited to:
- Performing RRM measurements for cell reselection;
- Performing mobile originated signalling, e.g. for registration, tracking area update etc.;
- Transmitting and receiving on-demand system information block request and response.

At 510, the MUSIM UE 500 determines that the connection between the first USIM 502 and Network A to be high priority. Responsive to the determination at 510, the MUSIM UE 500 determines that the ongoing or predicted mobility related procedure is to be completed. For example:
- The MUSIM UE 500 may wait for a handover command to be received (if not already received) from Network A and complete the handover procedure;
- The MUSM UE 500 may wait for a condition relating to conditional handover to be reached (if not already reached) and execute conditional handover; or
- The MUSIM UE 500 may wait for radio link failure to be declared (if not already declared) and complete radio link recovery.
- The MUSIM UE 500 may wait for beam failure recovery to complete.

Once the ongoing mobility related procedure is complete, at 512 the MUSIM UE 500 requests a short duration gap in service from Network A to perform the activity determined at 508. For example, the MUSIM UE 500 may request the short duration gap in service in an RRC Reconfiguration Complete message (where handover or conditional handover is performed) or an RRC Re-establishment Complete message (where radio link failure is declared).

At 514, the MUSIM UE 500 may leave Network A and establish RRC connection with Network B via second USIM 504. At 516, within the duration of the service gap on Network A, the MUSIM UE 500 may perform one or more communications with Network B via second USIM 504, before returning Network A. In this context, leaving network A means that the UE may not leave RRC_CONNECTED on network A, but instead is unable to send or receive communications with network A during the gap in service.

Optionally, the network may configure the MUSIM UE 500 with a deferred short gap in service for specific procedures depending on ongoing traffic. The configured deferred short gap in service may then be applied when a priority procedure, such as the aforementioned handover or radio link failure, are expected or already under execution.

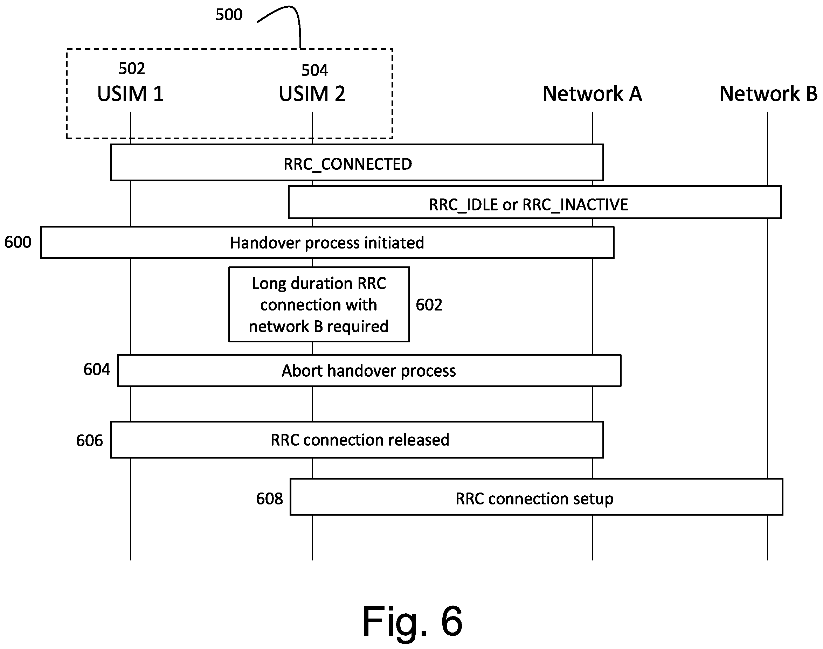

Reference is made to Figure 6, which shows a method according to some examples.

The MUSIM UE and Network configuration in the example of Figure 6 is the same as in Figure 5. That is to say, a MUSIM UE 500 has a first USIM 502 and second USIM 504. The first USIM 502 is in RRC_CONNECTED state with Network A, and the second USIM 504 is in RRC_IDLE or RRC_lNACTlVE state with Network B.

At 600, the MUSIM UE 500 may have started handover to a new target cell for the first USIM 502 in communication with Network A. This may be based on explicit RRC Reconfiguration signalling received from Network A, or may be due to conditions for conditional handover being met.

At 602, the MUSIM UE 500 determines that it is necessary to switch RRC connection from Network A to Network B. For example, the MUSIM UE 500 may have received paging from Network B and decided to answer the page by moving its RRC connection. This may be, for example, to receive a voice call over Network B.

At 604, the MUSIM UE 500 aborts any ongoing handover processes for the first USIM 502 on Network A. The MUSIM UE 500 may then provide an indication to Network A that MUSIM UE 500 will be leaving Network A.

For example, if the MUSIM UE 500 has started a handover process on Network A, the MUSIM UE 500 may abort the ongoing procedure and provide an indication to Network A that the MUSIM UE 500 will be leaving Network A. This may, for example, be part of msg3 sent towards the target node in Network A.

As another example, if the MUSIM UE 500 is in the process of evaluating whether one or more conditions for conditional handover are met, the MUSIM UE 500 may cancel and abort the ongoing evaluation, and provide an indication to Network A that the MUSIM UE 500 will be leaving Network A. When MUSIM UE 500 has already begun the conditional handover procedure by accessing the target cell, the MUSIM UE 500 may abort the ongoing conditional handover procedure and provide an indication the MUSIM UE 500 will be leaving Network A to the target cell in Network A. The indication may be part of msg3 sent toward the node providing the target cell.

Subsequently, at 606, the RRC connection to Network A via USIM 502 is released, and at 606 an RRC connection to Network B via USIM 504 is established.

In some examples, the MUSIM UE 500 may be configured to trigger the method of Figure 6 when the Time-to-Trigger (TTT) for conditional handover execution starts. This may help avoid delayed execution of the method. When this is not configured, MUSIM UE 500 may delay the providing of the indication to Network A that the MUSIM UE 500 will be leaving Network A. The delay may be dependent on the timer if the indication is to be provided after handover completion.

In some examples, the network may configure "report after mobility and leave" if the indication is important for the leaving network. That is to say, in some examples the MUSIM UE may be configured to perform the handover operation(s) before sending the indication to the new serving cell.

In some examples, if dual active protocol stack (DAPS) handover has started at the MUSIM UE 500 at the time of sending the indication to Network A that the MUSIM UE 500 will be leaving Network A, the MUSIM UE 500 may abort the access procedure to the target cell and trigger a fallback procedure. As part of the fallback procedure, the MUSIM UE 500 may send an RRC message indicating the fallback to the source node, and include in the RRC message the indication that the MUSIM UE 500 will be leaving Network A.

In some examples, the network may configure a condition for triggering the MUSIM UE 500 to provide the indication that the MUSIM UE 500 will be leaving Network A. For example, the network may cancel any ongoing handover processes. That is to say, for example, the network may cancel any ongoing handover, conditional handover, or DAPS procedures. In some examples, the network may provide a source and/or target coverage condition along with a timer status during the handover process. When the condition is not satisfied, the MUSIM UE 500 may leave the network without providing the indication that the MUSIM UE 500 will be leaving the network.

Thus, according to some examples, the MUSIM UE 500 may retain RRC connection in a first network as a result of requesting a short duration leave, allowing the MUSIM UE 500 to perform short duration activities in a second network, while also preventing the interruption of critical or important activities in the first network. According to other examples, the MUSIM UE 500 may indicate to the network when MUSIM UE 500 is expected to leave RRC connection on a first network to perform longer duration activities on a second network, thereby allowing network resources allocated for the MUSIM UE 500 on the first network to be reallocated, thereby improving network resource utilization.

In some examples, there is provided an apparatus for a user equipment, the apparatus comprising means for entering, at the user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determining a first priority for performing one or more operations for the first subscription within at least part of the first time period; determining a second priory for performing said one or more operations for the second subscription; based on the determined priorities, selecting one of the one or more operations for the first subscription and the one or more operations for the second subscription to perform first; and performing the selected one or more operations.

In some examples, there is provided an apparatus comprising at least one processor and at least one memory including a computer program code, the at least one memory and computer program code configured to, with the at least one processor, cause the apparatus at least to: enter, at a user equipment, a radio resource control connected state with a first network for providing a first subscription associated with the user equipment, the user equipment being associated with a second subscription provided via a second network, wherein the second subscription is in a radio resource control non-connected state; and in response to determining that one or more operations are to be performed for the second subscription within a first time period: determine a first priority for performing one or more operations for the first subscription within at least part of the first time period; determine a second priory for performing said one or more operations for the second subscription; based on the determined priorities, select one of the one or more operations for the first subscription and the one or more operations for the second subscription to perform first; and perform the selected one or more operations.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus for a user equipment, the apparatus comprising means for:
entering, at the user equipment, a radio resource control connected state with a first network for providing a first subscription associated with the user equipment, the user equipment being associated with a second subscription provided via a second network, wherein the second subscription is in a radio resource control non-connected state; and
in response to determining that one or more operations are to be performed for the second subscription within a first time period:
determining a first priority for performing one or more operations for the first subscription within at least part of the first time period;
determining a second priory for performing said one or more operations for the second subscription;
based on the determined priorities, selecting one of the one or more operations for the first subscription and the one or more operations for the second subscription to perform first; and
performing the selected one or more operations.

2. The apparatus of claim 1, wherein the selecting means is for:
determining that the first priority is higher than the second priority; and
completing the one or more operations on the first subscription before the one or more operations for the second subscription.

3. The apparatus of claim 2, wherein the means for determining that the first priority is higher than the second priority comprises means for:
determining that a mobility related procedure for the user equipment on the first network is ongoing or predicted to be triggered; and
determining that the mobility related procedure is to be completed before the one or more operations for the second subscription is performed.

4. The apparatus of claim 3, wherein the mobility related procedure comprises one of:
a handover procedure;
a conditional handover procedure;
a radio link recovery procedure; and
a beam failure recovery procedure.

5. The apparatus of any of claims 3 to 4, wherein determining that a mobility related procedure for the user equipment on the first network is ongoing or predicted to be triggered comprises at least one of:
performing radio resource management measurements, wherein the determining is based on the measurements;
performing radio link monitoring measurements;
performing beam failure detection measurements;
determining that one or more conditions associated with conditional handover are fulfilled or are close to being fulfilled;
determining that a timer related to radio link failure has been started;
determining that one or more out-of-synchronization indications have been received at the user equipment; and
determining that an indicator for beam failure is observed.

6. The apparatus of any of claims 3 to 5, wherein the means is for completing the mobility related procedure before performing the one or more operations for the second subscription.

7. The apparatus of any preceding claim, wherein the one or more operations on the second network comprise at least one of:
performing radio resource management measurements on the second network;
performing mobile originated signalling;
transmitting an on-demand a system information block request; and
receiving one or more system information blocks .

8. The apparatus of any preceding claim, wherein the means is for:
sending, to the first network, a request for a temporary gap in service for the first subscription for a given duration.

9. The apparatus of any preceding claim, wherein the user equipment maintains a radio resource control connection to a first network while performing the one or more activities on the second network.

10. The apparatus of claim 1, wherein the means is for:
determining that the second priority is higher than the first priority; and
aborting the one or more operations for the first subscription.

11. The apparatus of claim 10, wherein the means is for:
determining that a mobility related procedure for the user equipment on the first network is ongoing; and
aborting the mobility related procedure responsive to determining that the second priority is higher than the first priority.

12. The apparatus of any of claims 10 to 11, wherein aborting the mobility related procedure comprises at least one of:
aborting an ongoing handover procedure;
aborting an ongoing evaluation of one or more conditions associated with conditional handover;
aborting an ongoing conditional handover, wherein the user equipment has initiated access to a target cell in the first network; and
aborting a dual active protocol stack handover and triggering a fallback procedure.

13. The apparatus of any of claims 10 to 12, wherein the means is for:
receiving, from the first or second network, a further condition,
wherein the means is for aborting of the mobility related procedure when the further condition is met.

14. A method comprising:
entering, at a user equipment, a radio resource control connected state with a first network for providing a first subscription associated with the user equipment, the user equipment being associated with a second subscription provided via a second network, wherein the second subscription is in a radio resource control non-connected state; and
in response to determining that one or more operations are to be performed for the second subscription within a first time period:
determining a first priority for performing one or more operations for the first subscription within at least part of the first time period;
determining a second priory for performing said one or more operations for the second subscription;
based on the determined priorities, selecting one of the one or more operations for the first subscription and the one or more operations for the second subscription to perform first; and
performing the selected one or more operations.

15. A computer readable medium comprising program instructions for causing an apparatus to perform at least the following:
entering, at a user equipment, a radio resource control connected state with a first network for providing a first subscription associated with the user equipment, the user equipment being associated with a second subscription provided via a second network, wherein the second subscription is in a radio resource control non-connected state; and
in response to determining that one or more operations are to be performed for the second subscription within a first time period:
determining a first priority for performing one or more operations for the first subscription within at least part of the first time period;
determining a second priory for performing said one or more operations for the second subscription;
based on the determined priorities, selecting one of the one or more operations for the first subscription and the one or more operations for the second subscription to perform first; and
performing the selected one or more operations
